(19) Europäisches Patentamt
European Patent Office
Office européen des brevets

(11) EP 1 838 619 B1

(12) EUROPÄISCHE PATENTSCHRIFT

(45) Veröffentlichungstag und Bekanntmachung des Hinweises auf die Patenterteilung:
**15.02.2017 Patentblatt 2017/07**

(21) Anmeldenummer: **05820413.2**

(22) Anmeldetag: **12.12.2005**

(51) Int Cl.:
***C01F 17/00*** (2006.01) ***C08F 4/52*** (2006.01)
***C07F 5/00*** (2006.01)

(86) Internationale Anmeldenummer:
**PCT/EP2005/013285**

(87) Internationale Veröffentlichungsnummer:
**WO 2006/063755 (22.06.2006 Gazette 2006/25)**

(54) **VERFAHREN ZUR HERSTELLUNG VON WASSERFREIEN SELTENERDMETALLHALOGENIDEN, WASSERFREIE SELTENERDMETALLHALOGENIDE ENTHALTENDE SYNTHESEGEMISCHE UND DEREN VERWENDUNG**

METHOD FOR THE PRODUCTION OF WATER-FREE RARE EARTH METAL HALOGENIDES, SYNTHESIS MIXTURES CONTAINING WATER-FREE RARE EARTH METAL HALOGENIDES AND USE THEREOF

PROCEDE DE PRODUCTION D'HALOGENURES DE METAUX TERREUX RARES ANHYDRES, DE MELANGES DE SYNTHESE CONTENANT DES HALOGENURES DE METAUX TERREUX RARES ANHYDRES ET LEUR UTILISATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.12.2004 DE 102004060428**

(43) Veröffentlichungstag der Anmeldung:
**03.10.2007 Patentblatt 2007/40**

(73) Patentinhaber: **Chemetall GmbH**
**60487 Frankfurt am Main (DE)**

(72) Erfinder:
- **LISCHKA, Uwe**
  **60437 Frankfurt am Main (DE)**
- **RÖDER, Jens**
  **60486 Frankfurt am Main (DE)**
- **WIETELMANN, Ulrich**
  **61381 Friedrichsdorf (DE)**

(74) Vertreter: **Uppena, Franz**
**Chemetall GmbH**
**Patente, Marken & Lizenzen**
**Trakehner Strasse 3**
**60487 Frankfurt/Main (DE)**

(56) Entgegenhaltungen:

- **BURGESS J ET AL: "LANTHANIDE, YTTRIUM, AND SCANDIUM TRIHALIDES: PREPARATION OF ANHYDROUS MATERIALS AND SOLUTION THERMOCHEMISTRY" ADVANCES IN INORGANIC CHEMISTRY AND RADIOCHEMISTRY, ACADEMIC PRESS, NEW YORK, NY, US, Bd. 24, 1981, Seiten 57-114, XP001165343 ISSN: 0065-2792**
- **TAYLOR M D: "PREPARATION OF ANHYDROUS LANTHANON HALIDES" CHEMICAL REVIEWS, AMERICAN CHEMICAL SOCIETY, WASHINGTON, DC, US, Bd. 62, 1962, Seiten 503-511, XP001165354**
- **MEYER G: "THE AMMONIUM CHLORIDE ROUTE TO ANHYDROUS RARE EARTH CHLORIDES-THE EXAMPLE OF YCL3" INORGANIC SYNTHESES, Bd. 25, 1989, Seiten 146-150, XP008021415**
- **MEYER G ET AL: "THE AMMONIUM-BROMIDE ROUTE TO ANHYDROUS RARE EARTH BROMIDES MBR3" JOURNAL OF THE LESS-COMMON METALS, ELSEVIER-SEQUOIA S.A. LAUSANNE, CH, Bd. 127, 1987, Seiten 155-160, XP008021446**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- HAEBERLE N: "ZUR HERSTELLUNG HOCHREINER JODIDE DER LANTHANIDEN" TECHNISCH-WISSENSCHAFTLICHE ABHANDLUNGEN DER OSRAM-GESELLSCHAFT, SPRINGER VERLAG, BERLIN, DE, Nr. 11, 1973, Seiten 285-294, XP001165349

## Beschreibung

Die Erfindung betrifft ein Verfahren zur Herstellung von wasserfreien Seltenerdmetallhalogeniden, wasserfreie Seltenerdmetallhalogenide enthaltende Synthesegemische und deren Verwendung.

Seltenerdmetallhalogenide ($SEHal_3$ mit SE = Scandium, Yttrium, Lanthan und Lanthanoide (Pr, Nd, Pm, Sm, Eu, Gd, Tb, Dy, Ho, Er, Tm, Yb, Lu) und Hal = Cl, Br oder I) werden in wasserfreier Form als Reagenzien in der organischen Synthese eingesetzt oder sie dienen als Ausgangsverbindungen zur Herstellung weiterer SE-Verbindungen, wie SE-Alkoxiden oder SE-Organylen. So werden beispielsweise ausgehend vom THF-Komplex des Neodymchlorids Allylneodymverbindungen hergestellt, welche als Katalysatoren für die stereospezifische Butadienpolymerisation Verwendung finden (EP 919 573, R. Taube et al, J. Organomet. Chem. 1 (513), 37-47, 1996).

SE-metallhalogenide werden am einfachsten durch Umsetzung der Oxide mit wässrigen Säuren hergestellt. Man erhält auf diese Art Lösungen der SE-metallhalogenide, aus denen durch Abkühlen und/oder Eindampfen die Halogenidsalze in Form ihrer kristallinen Aquokomplexe erhalten werden können. Aus diesen Hydraten können die wasserfreien Halogenide jedoch *nicht* ohne weiteres erhalten werden, da sie beim Erhitzen neben Wasser auch Halogenwasserstoff abgeben und dabei in sauerstoffhaltige Feststoffe wie Oxidhalogenide oder gar die reinen Oxide (gilt z.B. für $(ScCl_3)_{aq}$) übergehen:

$$SE_2O_3 + 6\ HHal \xrightarrow{H_2O} 2\ (SEHal_3)_{aq} \xrightarrow[-H_2O,\ -HHal]{\Delta T} SEOHal$$

Nur unter sehr schonenden Bedingungen lassen sich in einigen Fällen aus den Hydraten unter rein physikalischen Trocknungsbedingungen wasserfreie Halogenide darstellen. Dazu ist es nötig, die Hydratverbindung zunächst unter einem Strom von Halogenwasserstoffgas (HHal) unter Einhaltung eines exakten Temperaturprogramms zu erhitzen. So wird beispielsweise wasserfreies $NdCl_3$ erhalten, indem $NdCl_3 \cdot 6\ H_2O$ unter reduziertem Druck in HCl-Atmosphäre, zunächst bei 80 °C gehalten wird, bis das meiste Wasser abgetrieben ist, dann für 2 bis 3 Stunden auf 160 °C und zuletzt auf 250 °C erhitzt wird. Danach wird das HCl durch trockenen Stickstoff ersetzt und abgekühlt. Nach der Dehydratisierung wird das noch Restsauerstoff enthaltende Produkt durch Vakuumsublimation bei 1000 K gereinigt (Gmelins Handbook of Inorg. Chem., 8th ed., Sc, Y, La-Lu, Part C4b, S. 156). Nachteilig an dieser Methode sind die aufwändigen Apparaturen (Korrosionsfestigkeit bei hohen Temperaturen), das komplexe Verfahren an und für sich und die langen Synthesezeiten.

Es sind deshalb alternative Herstellverfahren entwickelt worden, die im folgenden kurz beschrieben werden.

Wasserfreie Chloride können durch Erhitzen der Oxide oder Carbonsäuresalze (z.B. den Oxalaten) mit Ammoniumchlorid dargestellt werden:

$$SE_2O_3 + 6\ NH_4Cl \xrightarrow{ca.\ 300\ °C} 2\ SECl_3 + 3\ H_2O\uparrow + 6\ NH_3\uparrow$$

Nachteilig sind die hohen Temperaturen und der Anfall eines gasförmigen, ätzenden Nebenproduktes ($NH_3$).

Anstelle von Ammoniumchlorid können auch andere Chlorierungsmittel wie $S_2Cl_2$ oder $Cl_2/S_2Cl_2$-Mischungen verwendet werden. Auch in diesem Fall benötigt die Synthese gemäß

$$4\ SE_2O_3 + 3\ S_2Cl_2 + 9\ Cl_2 \rightarrow 8\ SECl_3 + 6\ SO_2\uparrow$$

hohe Temperaturen (500 bis 1000 °C) und es entsteht ein giftiges, ätzendes Nebenprodukt. Ähnlich ist auch $SOCl_2$ verwendbar (Gmelin C4a, S. 56 - 58).

Auch Tetrachlormethan und $CCl_4/Cl_2$-Mischungen sind bei hohen Temperaturen befähigt, SE-metalloxide zu chlorieren:

$$SE_2O_3 + 3\ CCl_4 \rightarrow 2\ SECl_3 + 3\ Cl_2\uparrow + 3\ CO\uparrow$$

$$SE_2O_3 + 3\ CCl_4 \rightarrow 2\ SECl_3 + 3\ COCl_2\uparrow$$

Wie bei den weiter oben aufgeführten Synthesevarianten sind hohe Temperaturen (500 bis 700 °C) nötig und es bilden sich unerwünschte Nebenprodukte (Gmelin C4a, 58 - 59). Ähnliches gilt auch für die weiteren bekannten

Chlorierungsmittel, nämlich $PCl_5$ und Aminhydrochloride (Gmelin C4a, S. 59 - 60).

Aufgabe der vorliegenden Erfindung ist es, ein Verfahren zur Herstellung wasserfreier Seltenerdmetallhalogenide $SEHal_3$ aufzuzeigen, das die Nachteile der bisher bekannten Verfahren vermeidet und insbesondere unter milden Reaktionsbedingungen (das heißt bei Normaldruck und ≤ ca. 150 °C) und ohne Bildung ätzender oder toxischer Nebenprodukte aus den Seltenerdmetalloxiden direkt die wasserfreien Halogenidsalze $SEHal_3$ liefert.

Die Aufgabe wird gelöst durch ein Verfahren, bei dem Seltenerdmetalloxide mit Halogenierungsmitteln der allgemeinen Formel

$$MHalX^1X^2X^3 \qquad (1)$$

mit M = Si, Ge, Sn, Ti, Zr, Hf
Hal = Cl, Br, I
$X^1$, $X^2$, $X^3$ = unabhängig voneinander Cl, Br, I, H, Alkoxy (-OR), wobei R einen Organorest mit 1 - 20 C-Atomen darstellt, Alkyl mit 1 bis 20 C-Atomen oder Aryl mit 6 bis 20 C-Atomen, wobei die Alkyl- oder Arylreste einen oder mehrere weitere Halogensubstituenten, ausgewählt aus der Gruppe F, Cl, Br oder I, tragen können

in einem aprotischen, polaren Lösemittel umgesetzt werden.

M ist in dieser Formel immer 4-wertig.

Bevorzugte Halogenierungsmittel sind die Tetrahalogenverbindungen $MHal_4$ (M und Hal = Bedeutungen siehe oben); $C_6H_5MHal_3$; $HMHal_3$; $C_6H_4HalMHal_3$ mit $C_6H_4Hal$ = z.B. Chlor-, Brom- oder Iodphenyl; $(H_3C)_2MClCH_2Hal$; $(CH_3)_2MHal_2$; $(CH_3)_3MHal$ oder Mischungen daraus. Besonders bevorzugte Halogenierungsmittel sind: $SiCl_4$, $SiBr_4$, $GeCl_4$, $SnCl_4$, $TiCl_4$, $TiBr_4$, $C_6H_5SiCl_3$, 4-$ClC_6H_4SiCl_3$, 4-$BrC_6H_4SiCl_3$, $HSiCl_3$, $(H_3C)_2ClSiCH_2Cl$, $(H_3C)_2CLSiCH_2Br$, $(CH_3)_2SiCL_2$ oder $(CH_3)_3SiCl$.

Als polare, aprotische Lösemittel können etherische Verbindungen verwendet werden. Diese können

- offenkettig wie $R^1$-O-$R^2$ (mit $R^1$ und $R^2$ unabhängig voneinander Alkyl oder Aryl mit 1 bis 8 C-Atomen); oder
- cyclisch wie

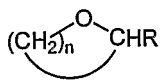

(mit n = 3 oder 4 und R = H oder Alkyl mit 1 bis 8 C-Atomen); oder

- mehrfunktionell wie R-O-(-$CH_2$-$CH_2$-O)$_n$-R' (mit R und R' unabhängig voneinander Alkylreste mit 1 bis 8 C-Atomen und n = 1 bis 100)

sein und entweder in reiner Form oder in Mischung eingesetzt werden. Als etherisches Lösemittel kann z.B. Tetrahydrofuran, Tetrahydropyran, 2-Methyltetrahydrofuran, Dimethylether, Diethylether oder Methyl-tert-Butylether oder eine Mischung daraus eingesetzt werden.

Weiterhin sind folgende aprotische, polare Lösemittel verwendbar:

- Ester, z.B. Carbonsäureester (wie Ethylacetat, γ-Butyrolacton, Methylbenzoat), oder Kohlensäureester (wie Dimethylcarbonat, Diethylcarbonat, Propylencarbonat, Ethylencarbonat), oder Mischungen daraus; oder
- Ketone (z.B. Aceton, Propiophenon); oder
- Amide (z.B. N-Methylpyrrolidon, Dimethylacetamid, NMPU); oder
- Nitrile (z.B. Acetonitril, Butyronitril); oder
- Halogenfreie Schwefelverbindungen (z.B. Dimethylsulfoxid); oder
- tertiäre Amine (z.B. Triethylamin, Tetramethylethylendiamin).

Den polaren, aprotischen Lösemitteln können gegebenenfalls ein oder mehrere Kohlenwasserstoffe wie z.B. Alkane (z.B. Pentan, Hexan, Cyclohexan, Methylcyclohexan, Heptan oder Octan) oder Aromaten (z.B. Benzol, Toluol, Ethylbenzol, Cumol oder Xylol) im Gewichtsverhältnis Lösemittel : Kohlenwasserstoff = 1 : maximal 5 hinzugefügt werden.

Als Seltenerdmetalloxide werden die Verbindungen $SE_2O_3$ mit SE = Scandium, Yttrium, La, Pr, Nd, Pm, Sm,

Eu, Gd, Tb, Dy, Ho, Er, Tm, Yb oder Lu, im allgemeinen in handelsüblicher Form eingesetzt. Bevorzugt werden sie in pulverisierter Form und wasserfrei, das heißt mit $H_2O$-Gehalten < 0,5 % verwendet. Besonders bevorzugt werden eingesetzt $Nd_2O_3$, $Sm_2O_3$ oder $La_2O_3$. Es wurde überraschend gefunden, dass die oben genannten Seltenerdoxide als Suspension in polaren aprotischen Lösemitteln bereits bei Temperaturen z.B. ≤ 30°C mit den Halogenierungsmitteln der Formel (1) reagieren und gemäß nachfolgender Reaktion die gewünschten Seltenerdmetallhalogenide liefern:

$$n\,SE_2O_3 + n\,\frac{6}{Y}\,MHalX^1X^2X^3 \xrightarrow{\text{Lösemittel}} 2\,n\,SEHal_3 + \frac{6}{Y}\,[M(O)_{1/2}X^4X^5X^6]_n$$

$X^1$, $X^2$, $X^3$ sind unabhängig voneinander Cl, Br, I, H, Alkoxy (-OR), wobei R einen Organorest mit 1 - 20 C-Atomen darstellt, Alkyl mit 1 bis 20 C-Atomen oder Aryl mit 6 bis 20 C-Atomen, wobei die Alkyl- oder Arylreste einen oder mehrere weitere Halogensubstituenten, ausgewählt aus der Gruppe F, Cl, Br oder I, tragen können.

Y kann den Wert 1, 2, 3 oder 4 annehmen und errechnet sich aus der Anzahl der Halogenidatome in der Verbindung $MHalX^1X^2X^3$: Y = 1 + (Anzahl der Substituenten $X^1$, $X^2$, $X^3$ mit der Bedeutung Halogen). Ist keiner der Substituenten $X^1$, $X^2$ und $X^3$ ein Halogen, dann ist Y = 1; sind alle der Substituenten $X^1$, $X^2$ und $X^3$ ein Halogen, dann ist Y = 4.

Im Reaktionsprodukt $[M(O)_{1/2}X^4X^5X^6]_n$ ist die Bedeutung der Reste $X^4$, $X^5$ und $X^6$ wie folgt:

Für jeden Substituenten $X^1$, $X^2$ und/oder $X^3$ des Halogenierungsmittels, der ein Halogen (Cl, Br, I) darstellt, besteht der jeweils korrespondierende Substituent $X^4$, $X^5$ und/oder $X^6$ im Reaktionsprodukt $[M(O)_{1/2}X^4X^5X^6]_n$ aus formal einem halben Sauerstoffatom $(O)_{1/2}$. Das heißt, wenn $X^1$ = Halogen, dann ist $X^4 = (O)_{1/2}$, wenn $X^2$ = Halogen, dann ist $X^9 = (O)_{1/2}$ und wenn $X^3$ = Halogen, dann ist $X^6 = (O)_{1/2}$.

Für jeden Substituenten $X^1$, $X^2$ und/oder $X^3$ des Halogenierungsmittels, der <u>nicht</u> ein Halogen (Cl, Br, I) darstellt, ist der jeweils korrespondierende Substituent $X^4$, $X^5$ und/oder $X^6$ im Reaktionsprodukt $[M(O)_{1/2}X^4X^5X^6]_n$ unverändert. Das heißt, wenn $X^1 \neq$ Halogen, dann ist $X^4 = X^1$; wenn $X^2 \neq$ Halogen, dann ist $X^5 = X^2$; und wenn $X^3 \neq$ Halogen, dann ist $X^6 = X^3$.

Aus der oben angegebenen Reaktionsgleichung ergeben sich für die unterschiedlichen Metallhalogenverbindungen $MHalX^1X^2X^3$ folgende theoretischen Stöchiometrien:

| $X^1$ | $X^2$ | $X^3$ | theoretisches Molverhältnis $SE_2O_3$ : $MHalX^1X^2X^3$ |
|---|---|---|---|
| ‡ Hal | ‡ Hal | ‡ Hal | 1 : 6 |
| = Hal | ‡ Hal | ‡ Hal | 1 : 3 |
| = Hal | = Hal | ‡ Hal | 1 : 2 |
| = Hal | = Hal | = Hal | 1 : 1,5 |

‡ Hal bedeutet "Substituent ungleich Halogen"; = Hal bedeutet "Substituent gleich Halogen"

Sinnvollerweise werden die theoretischen Umsetzungsverhältnisse weitgehend eingehalten. Um im Falle wenig reaktiver Rohstoffkombinationen trotzdem eine vollständige Umsetzung zum Seltenerdhalogenid zu bewirken, ist es oftmals sinnvoll, die Metallhalogenverbindung im Überschuss einzusetzen. In einer bevorzugten Ausführungsform wird die Metallhalogenverbindung mit 1 bis 50 % Überschuss, bezogen auf die in obiger Tabelle angegebenen theoretischen Stöchiometrien eingesetzt.

Im folgenden sind zwei Beispiele für die oben beschriebene allgemeine Reaktionsgleichung angegeben:

a) $X^1$, $X^2$ und $X^3$ = Hal

$$2\,SE_2O_3 + 3\,MHal_4 \rightarrow 4\,SEHal_3 + 3\,MO_2$$

b) $X^1 = C_6H_5$, $X^2$ und $X^3$ = Hal

$$n\,SE_2O_3 + 2\,n\,Hal_3MC_6H_5 \rightarrow 2\,n\,SEHal_3 + 2\,[M(O)_{1,5}C_6H_5]_n$$

Die einfache Bildungsweise der gewünschten SE-metallhalogenide ist deshalb überraschend, weil die *umgekehrte* Reaktion in Abwesenheit der nach dem erfindungsgemäßen Verfahren eingesetzten Lösemittel literaturbekannt

ist. So wird im Gmelin, Sc, Y, La-Lu, C4a, S. 152 beschrieben, dass Quarz und Silikatgläser mit flüssigen und festen Seltenerdmetallchloriden bei erhöhten Temperaturen gemäß der Gleichung

$$2\ SECl_3\ (s, l) + SiO_2\ (s) \rightarrow 2\ MOCl\ (s) + SiCl_4\ (g)$$

reagierten. Weiterhin könnten sich eine Vielzahl von Oxidsilikaten und Chlorsilikaten (z.B. $Yb_3(SiO_4)_2Cl$) bilden.

Im Gegensatz dazu wurde hier gefunden, dass Seltenerdmetalloxide mit z.B. Siliciumtetrachlorid bereits bei Raumtemperatur in einem aprotischen, polaren Lösemittel (z.B. Tetrahydrofuran (THF) schnell und irreversibel zu den gewünschten SE-Chloriden reagieren:

$$2\ SE_2O_3 + 3\ SiCl_4 \xrightarrow{THF} 4\ (SECl_3)_{THF} + 3\ SiO_2$$

Die bevorzugte Umsetzungstemperatur richtet sich nach der Reaktivität der jeweiligen Rohstoffkombination. Im allgemeinen kann bei Raumtemperatur gearbeitet werden. Die entstehende Reaktionswärme wird über entsprechende Kühlung abgeführt. Bei speziellen Rohstoffkombinationen kann es sich aber auch empfehlen, die Reaktion bei tiefen Temperaturen oder in der Wärme zu fahren. Die Innentemperatur kann zwischen -20 und 100 °C, besonders bevorzugt zwischen 0 und 70 °C betragen.

Besonders überraschend ist auch, dass das als Nebenprodukt anfallende Metalloxid, z.B. $SiO_2$, zunächst in löslicher Form, vermutlich als metastabil lösliches Polymersol, also in kolloidaler Verteilung anfällt. Die Seltenerdmetallhalogenide besitzen demgegenüber nur eine geringe Löslichkeit in den erfindungsgemäß eingesetzten Lösemitteln oder Lösemittelmischungen, wodurch das Seltenerdmetallhalogenid in fester Form, zumeist als Solvat mit dem verwendeten aprotischen polaren Lösemittel, durch fest/flüssig-Trennung in reiner Form isoliert werden kann.

Beispielsweise bildet sich bei der Umsetzung von $Nd_2O_3$ mit $SiCl_4$ in THF ein $NdCl_3 \cdot 2$ THF-Komplex, der in THF nur geringfügig (ca. 1 bis 1,5 Gew.-%, bezogen auf $NdCl_3$) löslich ist und der in kristalliner Form durch Filtration vom Lösemittel und dem $SiO_2$-Sol abgetrennt und - je nach genauen Reaktions- und Aufarbeitungsbedingungen - mit Ausbeuten zwischen ca. 60 und 90 % isoliert werden kann.

Häufig wird beobachtet, dass das $MO_2$-Nebenprodukt nur für bestimmte Zeit (Stunden bis einige Tage) als Sol gelöst ist, aber dann in die Gelform übergeht. Da eine einfache Abtrennung des $MO_2$-Nebenproduktes (z.B. durch Filtration, Dekantation oder Zentrifugation) dann nicht mehr möglich ist, besteht eine besonders bevorzugte Ausführungsform der vorliegenden Erfindung darin, die fest/flüssig-Trennung vordem Übergang in den Gelzustand vorzunehmen.

Reaktionsgemische, bei denen das $MO_2$-Nebenprodukt bereits in Gelform vorliegt, können jedoch auf eine der nachfolgend beschriebene Arten aufgearbeitet werden

a) Abtrennung des $MO_2$-Polymers durch Osmose, d.h. Membranpermeation und/oder

b) Eindampfung des Reaktionsgemisches bis zum trockenen Zustand und selektives Auflösen des Seltenerdmetallhalogenids

Für Variante a) ist vorgesehen, das $MO_2$-haltige sol- oder gelförmige Reaktionsgemisch durch Filtration durch eine semipermeable Membran, das ist ein zur Filtration einsetzbares Membranfilter mit Porenweiten zwischen 1 und 100 nm zu reinigen. Während der niedermolekulare, lösliche $MHal_3$-Komplex in gelöster Form die Poren passieren kann, wird das $MO_2$-Polymer zurückgehalten.

Bei Variante b) wird das Reaktionsgemisch im Temperaturbereich zwischen 20 und 100 °C teilweise oder vollständig, zum Schluss bevorzugt unter vermindertem Druck, eingedampft. Die zurückbleibende Suspension bzw. das feste Reaktionsgemisch wird dann mit einem Lösemittel behandelt, das das SE-metallhalogenid selektiv löst. Als Lösemittel eignen sich hier beispielsweise Ether, Alkohole, Ester, Ketone, Amide, Nitrile und Amine und prinzipiell auch Wasser. Letzteres ist jedoch nachteilig, weil auf diese Art und Weise nur die SEmetallhydrate erhalten werden können, die auf bekannte Art und Weise - jedoch umständlich - wieder in die wasserfreien Verbindungen zurückverwandelt werden können.

Es wurde weiterhin überraschend gefunden, dass sich die als Nebenprodukte entstandenen Metalloxide nach Totaleindampfung nicht mehr in pH-neutralen Lösungsmitteln, das sind Ether, Alkohole, Ester, Ketone, Nitrile, Kohlenwasserstoffe entweder in reiner Form oder in Mischung lösen, so dass eine effektive Reinigung der SE-metallhalogenide durch selektive Auflösung des SE-halogenids in diesen Lösemitteln erreicht werden kann.

Der Extraktionsprozess der löslichen SE-metallkomponente kann auf verschiedene Arten nach bekannten Verfahren erfolgen:

- mehrmaliges Suspendieren im pH-neutralen Lösemittel und fest/flüssig Trennung, so oft, bis im Filtrat keine SE-metallverbindung mehr nachweisbar ist,
- Extraktion durch siedendes pH-neutrales Lösemittel z.B. in einer sogenannten Soxleth-Apparatur oder
- Festbettextraktion, das heißt Einbringen des festen Reaktionsgemisches in eine Art Säule und Durchlaufenlassen eines pH-neutralen Lösemittels.

Als pH-neutrale Lösemittel eignen sich insbesondere organische Lösemittel aus den Gruppen Ether, Alkohole, Ester, Ketone, Nitrile und Kohlenwasserstoffe, entweder in reiner Form oder in Mischung.

Bei besonders hohen Reinheitsansprüchen kann das SE-metallhalogenid/Metalloxidgemisch auch durch Sublimation bei $\geq$ 800 °C im Hochvakuum gereinigt werden. Während das SE-metallhalogenid unter diesen Bedingungen flüchtig ist, bleibt das Oxidnebenprodukt zurück.

Die nach dem erfindungsgemäßen Verfahren hergestellten SE-metallhalogenide können als Ausgangsmaterialien für die Herstellung von speziellen SE-Metallverbindungen wie SE-metallalkoxiden, SE-metallamiden sowie SEmetallalkylen und -arylen, speziell der Cyclopentadienverbindungen und Verbindungen der benzoannelierten Cyclopentadien-Derivate wie Inden- oder Fluorenverbindungen, verwendet werden. Weiterhin dienen sie direkt als Lewisacide Katalysatoren in der organischen und anorganischen Synthesechemie.

Da in vielen Reaktionen die neutralen Metalloxidnebenprodukte nicht stören, können auch gleich die Reaktions- oder Synthesegemische, also ohne vorgeschaltete Reinigungsstufe, als Reagenzien oder Katalysatoren verwendet werden. Aus Kostengründen ist es besonders bevorzugt, die SEhalogenidverbindung *in situ* herzustellen und sie "im gleichen Topf" direkt für einen Folgechemieschritt wie z.B. Acetalisierungen, Friedel-Crafts-Reaktionen etc. einzusetzen.

Die erfindungsgemäß hergestellen Seltenerdmetallhalogenide finden Verwendung z.B. als Reagenz oder Katalysator für organische oder anorganische Reaktionen, als Rohstoff zur Herstellung spezifischer Seltenerdverbindungen oder als Katalysator in Polymerisationsreaktionen, beispielsweise in der Herstellung von Polyolefinen (Polyethylen, Polypropylen, EPDM- und SBS-Copolymeren) oder in der Kondensationspolymerisation zur Synthese von Polyestern wie Polyethylenterephthalat, Polyethylennaphthenat oder Polybutylenterephthalat.

Besonders bevorzugt werden die Metallhalogenverbindungen für eine der nachfolgenden Reaktionen eingesetzt: Kondensationen, Aldolreaktionen, Acetalbildung, CC-Verknüpfungen sowie Ringöffnungsreaktionen.

Der Gegenstand der Erfindung wird anhand der folgenden Beispiele näher erläutert:

**Beispiel 1: Herstellung von $NdCl_3$. 2 THF aus $Nd_2O_3$/$SiCl_4$ in THF**

In einem inertisierten, d.h. getrockneten und mit Argon gefüllten 0,5-I-Doppelmantelreaktor mit Rückflusskühler und Tropftrichter wurden 25,2 g (75 mmol) Neodymoxid (99 % von Firma Aldrich) in 140 g THF suspendiert. Unter Rühren wurden innerhalb von 30 Minuten 20,5 g (120 mmol) Siliciumtetrachlorid bei Innentemperaturen zwischen 25 und 30 °C zudosiert.

Die Umsetzung war deutlich exotherm und es bildete sich eine hellblaue Suspension. Nach Beendigung des Zutropfens wurde noch 1,5 Stunden bei ca. 30 °C nachgerührt und dann auf 20 °C abgekühlt.

Dann wurde die Suspension auf eine G3-Glasfritte abgelassen und der kristalline Filterrückstand einmal mit 48 g THF nachgewaschen.

Nach vierstündiger Vakuumtrocknung bei 25 °C wurden 50,8 g eines feinkristallinen, fließfähigen Pulvers erhalten.

Analyse: 2,65 mmol/g Nd; 7,51 mmol/g Cl; 52 ppm Si
(Theorie für $NdCl_3 \cdot 2$ THF: 2,53 mmol/g Nd; 7,60 mmol/g Cl)
Ausbeute: 90 % der Theorie.

Nach zweitägigem Stehen lassen wandelten sich die zunächst leicht flüssigen Filtrate in die Gelform um.

**Beispiel 2: Herstellung von $NdCl_3 \cdot 2$ THF aus $Nd_2O_3$ und $TiCl_4$/THF in THF-Suspension**

In einem 2-I-Doppelmantelreaktor wurden 968 g einer 0,28 molalen Titantetrachloridlösung in THF vorgelegt (271 mmol) und unter Rühren innerhalb von ca. 40 Minuten bei Innentemperaturen zwischen 25 und 30 °C portionsweise (mit Feststoffdosierbirne) mit 54,5 g (162 mmol) Neodymoxidpulver versetzt.

Nach Abklingen der Wärmefreisetzung wurde noch 30 Minuten bei ca. 25 °C gerührt und die Suspension dann filtriert und der Filterrückstand mit 150 g THF gewaschen. Nach Vakuumtrocknung wurden 75,6 g eines Pulvers erhalten.

Analyse: Nd = 2,50 mmol/g, Cl = 7,50 mmol/g, Ti = 0,05 mmol/g

Ausbeute: 58 % der Theorie.

Das Produkt enthielt 0,4 Gew.% $TiO_2$.

Aus den vereinigten Filtraten konnten nach Aufkonzentrieren im Vakuum, Abkühlen auf 0 °C und anschließende Filtration nochmals 32 g eines mit 1,8 Gew.-% $TiO_2$ verunreinigten Pulvers erhalten werden. Die Gesamtausbeute lag bei ca. 83 % der Theorie.

Weitere erfindungsgemäßen Beispiele sind den beiden folgenden Tabelle zu entnehmen:

**Tabelle 1: Herstellung von Seltenerdhalogeniden**

| Vers. Nr. | SE-oxid | | Halogenierungsmittel | | Lösemittel | | Reaktionsbedingungen | Aufarbeitung |
|---|---|---|---|---|---|---|---|---|
| | Art | Menge (mmol) | Art | Menge (g) | Art | Menge (g) | | |
| 3 | $Sm_2O_3$ | 19,4 | $SiCl_4$ | 29,4 | THF | 90 | 2Std. Refluxieren | Filtration/ Waschen |
| 4 | $Nd_2O_3$ | 50 | $PhSiCl_3$ | 100 | THF | 92 | 1 Std. 30 °C, dann 2 Std. Refluxieren | " |
| 5 | $La_2O_3$ | 102 | $SiCl_4$ | 156 | THF | 334 | Rühren ca. 25 °C, dann 1 Std. Refluxieren | Totaleindampfung/ Soxleth-Extraktion |
| 6 | $La_2O_3$ | 100 | $SiCl_4$ | 158 | THF | 248 | Rühren ca. 25 °C, dann 3 Std. Refluxieren | Filtration/ Waschen |
| 7 | $La_2O_3$ | 50 | $SiCl_4$ | 78,9 | THF/ Toluol | 160 | wie Vers. 6 | " |
| 8 | $La_2O_3$ | 50 | $SiCl_4$ | 79 | Aceton | 296 | 3 Std. 20 - 50 °C | " |
| 9 | $La_2O_3$ | 50 | $SiCl_4$ | 78,5 | DMC | 171 | 1 Std. ca. 25 °C, dann 1,5 Std. Refluxieren | " |
| 10 | $La_2O_3$ | 30 | $SiBr_4$ | 45 | 2-MeTHF | 132 | 3 Std. 25 °C, dann 1 Std. Refluxieren | " |
| 11 | $La_2O_3$ | 50 | $Me_2Si(CH_2Cl)Cl$ | 300 | THF | 120 | 8 Std. Refluxieren | " |

**Tabelle 2: Reaktionsergebnisse der Seltenerdhalogenidsynthesen**

| Vers. Nr. | Produkt | | Analyse (mmol/g) | | | Zusammensetzung $SEHal_3$ n Donor | Ausbeute (% d. Th.) |
|---|---|---|---|---|---|---|---|
| | Aussehen | Menge (g) | SE | Hal | Si | | |
| 3 | hellgelbes Pulver | 12,5 | 2,6 (Sm) | 7,3 (Cl) | 0,10 | $SmCl_3 \cdot 2$ THF | 84 |
| 4 | hellblaues Pulver | 36,5 | 2,45 (Nd) | 7,5 (Cl) | 0,05 | $NdCl_3 \cdot 2$ THF | 89 |
| 5 | weißes Pulver | 28 | 2,80 (La) | 8,60 (Cl) | 0,15 | $LaCl_3 \cdot 2$ THF | 38 |
| 6 | weißes Pulver | 47,9 | 2,60 (La) | 7.4 (Cl) | ≤ 0,05 | $LaCl_3 \cdot 2$ THF | 62 |
| 7 | " | 31,7 | 2,58 (La) | 7,70 (Cl) | 0,01 | $LaCl_3 \cdot 2$ THF | 82 |
| 8 | voluminös, weiß | 37,0 | 2,40 (La) | 7,20 (Cl) | 1,80 | $LaCl_3 \cdot 2,5$ Aceton* | 89 |
| 9 | weißes Pulver | 27,5 | 2,45 (La) | 6,90 (Cl) | 0,08 | $LaCl_3 \cdot 1,6$ DMC | 67 |
| 10 | weißes Pulver | 9,3 | 1,97 (La) | 5,70 (Br) | 0,02 | $LaBr_3 \cdot 2$ THF | 31 |
| 11 | weißes Pulver | 31 | 2,71 (La) | 8,10 (Cl) | 0,10 | $LaCl_3 \cdot 2$ THF | 84 |

* enthält ca. 8 % $SiO_2$

Bei Versuch 3 wurde statt $Nd_2O_3$ Samariumoxid eingesetzt und als Reaktionsprodukt $SmCl_3$ in Form des THF-Komplexes erhalten.

In Versuch 4 wurde statt $SiCl_4$ ein organosubstituiertes Silylhalogenid ($C_6H_5SiCl_3$) verwendet, das nach kurzem Refluxieren Neodymoxid ins Chlorid umwandelte.

Für die Beispiele 5 bis 11 wurde pulverisiertes Lanthanoxid verwendet. Die Versuche 6, 7, 8 und 9 unterschieden sich durch die Wahl der Reaktionslösemittel: THF, THF-Toluol, Aceton und DMC eignen sich in ähnlicher Weise. Wird Aceton verwendet, so fällt das Nebenprodukt $SiO_2$ mit dem $LaCl_3$-Kristallisat gleichzeitig aus.

Bei Versuch 5 wurde eine spezielle Aufarbeitungsmethode gewählt: nach Umsetzung der Reaktanden $La_2O_3$ und $SiCl_4$ in THF wurde die entstandene Reaktionssuspension im Rotationsverdampfer bei einer Badtemperatur von 60 °C und zuletzt 14 mbar totaleingedampft. Der feste, weiße Rückstand wurde in einer Ar-gefüllten Handschuhbox gemörsert und dann in einer Soxleth-Apparatur ca. 30 Stunden mit siedendem THF extrahiert. Es entstand auf diese Weise eine Suspension, die nach Abkühlung filtriert wurde. Der feste Filterrückstand wurde mit THF gewaschen und bei Raumtemperatur bis zur Gewichtskonstanz getrocknet. Es wurden 28,0 g eines feinen weißen Pulvers mit der in Tabelle 2 angegebenen Zusammensetzung erhalten.

Beispiel 10 zeigt die Herstellung eines SE-Bromids, in diesem Falle $LaBr_3$, das unter Verwendung des Bromierungsmittels $SiBr_4$ hergestellt wurde.

Schließlich wird in Beispiel 11 die Verwendung eines Organosiliciumchlorids gezeigt, bei dem der Organorest seinerseits funktionalisiert ist (mit Chlorid).

## Patentansprüche

1. Verfahren zur Herstellung wasserfreier Seltenerdmetallhalogenide ($SEHal_3$), **dadurch gekennzeichnet, dass** Seltenerdmetalioxide $SE_2O_3$ mit SE = Sc, Y, La, Pr, Nd, Pm, Sm, Eu, Gd, Tb, Dy, Ho, Er, Tm, Yb oder Lu mit Halogenierungsmitteln der allgemeinen Formel

$$MHalX^1X^2X^3 \qquad (1)$$

mit M = Si, Ge, Sn, Ti, Zr, Hf
Hal = Cl, Br, I
$X^1$, $X^2$, $X^3$ = unabhängig voneinander Cl, Br, I, H, Alkoxid (-OR), wobei R einen Organorest mit 1 - 20 C-Atomen darstellt, Alkyl mit bis 1 - 20 C-Atomen oder Aryl mit 6 bis 20 C-Atomen, wobei die Alkyl- oder Arylreste einen oder mehrere weitere Halogensubstituenten, ausgewählt aus der Gruppe F, Cl, Br oder I, tragen können

in einem aprotischen, polaren Lösemittel umgesetzt werden.

**2.** Verfahren nach Anspruch 1, **dadurch gekennzeichnet, dass** als Halogenierungsmittel Tetrahalogenverbindungen $MHal_4$ eingesetzt werden.

**3.** Verfahren nach Anspruch 1, **dadurch gekennzeichnet, dass** als Halogenierungsmittel folgende Verbindungen eingesetzt werden: $C_6H_5MHal_3$, $HMHal_3$, $C_6H_4HalMHal_3$, $(H_3C)_2MClCH_2Hal$, $(CH_3)_2MHal_2$, $(CH_3)_3MHal$ oder Mischungen daraus.

**4.** Verfahren nach einem der Ansprüche 1 bis 3, **dadurch gekennzeichnet, dass** als Halogenierungsmittel folgende Verbindungen eingesetzt werden: $SiCl_4$, $SiBr_4$, $GeCl_4$, $SnCl_4$, $TiCl_4$, $TiBr_4$, $C_6H_5SiCl_3$, 4-$ClC_6H_4SiCl_3$, 4-$BrC_6H_4SiCl_3$, $HSiCl_3$, $(H_3C)_2ClSiCH_2Cl$, $(H_3C)_2CLSiCH_2Br$, $(CH_3)_2SiCl_2$ oder $(CH_3)_3SiCl$.

**5.** Verfahren nach einem der Ansprüche 1 bis 4, **dadurch gekennzeichnet, dass** als polares, aprotisches Lösemittel eine oder mehrere etherische Verbindungen verwendet werden, wobei diese offenkettig sein können, wie $R^1$-O-$R^2$ (mit $R^1$ und $R^2$ unabhängig voneinander Alkyl oder Aryl mit 1 bis 8 C-Atomen); oder cyclisch sein können, wie

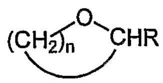

(mit n = 3 oder 4 und R = H oder Alkyl mit 1 bis 8 C-Atomen); oder mehrfunktionell sein können, wie R-O-(-$CH_2$-$CH_2$-O)$_n$-R' (mit R und R' unabhängig voneinander Alkylreste mit 1 bis 8 C-Atomen und n = 1 bis 100) und entweder in reiner Form oder in Mischung eingesetzt werden.

**6.** Verfahren nach einem der Ansprüche 1 bis 4, **dadurch gekennzeichnet, dass** als aprotisches, polares Lösemittel ein oder mehrere der folgenden Stoffe eingesetzt wird: Ester, wie Carbonsäureester (wie Ethylacetat, $\gamma$-Butyrolacton, Methylbenzoat), oder Kohlensäureester (wie Dimethylcarbonat, Diethylcarbonat, Propylencarbonat, Ethylencarbonat), oder Mischungen daraus; oder Ketone (wie Aceton, Propionon); oder Amide (wie N-Methylpyrrolidon, Dimethylacetamid, NMPU); oder Nitrile (wie Acetonitril, Butyronitril); oder halogenfreie Schwefelverbindungen (wie Dimethylsulfoxid); oder tertiäre Amine (wie Triethylamin, Tetramethylethylendiamin).

**7.** Verfahren nach Anspruch 6, **dadurch gekennzeichnet, dass** als etherisches Lösemittel bevorzugt Tetrahydrofuran, Tetrahydropyran, 2-Methyltetrahydrofuran, Dimethylether, Diethylether oder Methyl-tert-Butylether oder eine Mischung daraus verwendet wird.

**8.** Verfahren nach einem der Ansprüche 1 bis 7, **dadurch gekennzeichnet, dass** dem polaren, aprotischen Lösemittel ein oder mehrere Kohlenwasserstoffe im Gewichtsverhältnis von 1 Teil polares, aprotisches Lösemittel : maximal 5 Teile Kohlenwasserstoff hinzugefügt werden.

**9.** Verfahren nach Anspruch 8, **dadurch gekennzeichnet, dass** als Kohlenwasserstoff ein oder mehrere Alkane (wie Pentan, Hexan, Cyclohexan, Methylcyclohexan, Heptan oder Octan) oder ein oder mehrere Aromaten, wie Benzol, Toluol, Ethylbenzol, Cumol oder Xylol, eingesetzt werden.

**10.** Verfahren nach einem der Ansprüche 1 bis 9, **dadurch gekennzeichnet, dass** die Seltenerdmetalloxide in pulverisierter Form und mit Restwassergehalten von < 0,5 Gew.-% eingesetzt werden.

**11.** Verfahren nach einem der Ansprüche 1 bis 10, **dadurch gekennzeichnet, dass** als Seltenerdmetalloxide $Nd_2O_3$, $Sm_2O_3$ oder $La_2O_3$ eingesetzt werden.

**12.** Verfahren nach einem der Ansprüche 1 bis 11, **dadurch gekennzeichnet, dass** das Molverhältnis zwischen dem Seltenerdoxid $SE_2O_3$ und der Metallhalogenverbindung $MHalX^1X^2X^3$ wie folgt gewählt wird:

ca. 1 : 6 für $X^1$,$X^2$,$X^3$ ‡ Hal
ca. 1 : 3 für $X^1$ = Hal, $X^2$, $X^3$ ‡ Hal

ca. 1 : 2 für $X^1$, $X^2$ = Hal, $X^3$ ‡ Hal
ca. 1 : 1,5 für $X^1$, $X^2$, $X^3$ = Hal

**13.** Verfahren nach einem der Ansprüche 1 bis 12, **dadurch gekennzeichnet, dass** das Halogenierungsmittel im Überschuss von 1 bis 50 mol-% eingesetzt wird.

**14.** Verfahren nach einem der Ansprüche 1 bis 13, **dadurch gekennzeichnet, dass** die Reaktionstemperatur im Bereich von -20 bis +100 °C liegt.

**15.** Verfahren nach Anspruch 14, **dadurch gekennzeichnet, dass** die Reaktionstemperatur im Bereich von 0 bis 70 °C liegt.

**16.** Verfahren nach einem der Ansprüche 1 bis 15, **dadurch gekennzeichnet, dass** die erhaltenen Seltenerdmetallhalogenide nach Umsetzungsende, aber vor Beginn eines eventuell einsetzenden Gelbildungsprozesses durch eine fest/flüssig-Trennoperation von der Lösung des Metalloxidnebenproduktes abgetrennt werden.

**17.** Verfahren nach Anspruch 16, **dadurch gekennzeichnet, dass** die erhaltenen festen Seltenerdmetallhalogenide durch Waschen mit einem aprotischen Lösemittel gereinigt werden.

**18.** Verfahren nach einem der Ansprüche 16 bis 17, **dadurch gekennzeichnet, dass** die Reinigung auf einem Filter, in einer Soxleth-Apparatur oder in einer Säule durch Festbettextraktion vorgenommen wird.

**19.** Verfahren nach einem der Ansprüche 1 bis 18, **dadurch gekennzeichnet, dass** das Reaktionsgemisch nach Abklingen der exothermen Reaktion bis zum trockenen Zustand eingedampft wird.

**20.** Verfahren nach Anspruch 19, **dadurch gekennzeichnet, dass** die Eindampfung im Temperaturbereich zwischen 20 und 100 °C und zumindest teilweise unter reduziertem Druck vorgenommen wird.

**21.** Verfahren nach einem der Ansprüche 19 bis 20, **dadurch gekennzeichnet, dass** das Seltenerdhalogenid durch Extraktion mit einem pH-neutralen Lösemittel aus dem Eindampfrückstand gewonnen wird.

**22.** Verfahren nach Anspruch 21, **dadurch gekennzeichnet, dass** das pH-neutrale Lösemittel einen oder mehrere der Stoffe ausgewählt aus der Gruppe Ether, Alkohole, Ester, Ketone und Nitrile und gegebenenfalls zusätzlich einen oder mehrere Kohlenwasserstoffe enthält.

**23.** Verfahren nach einem der Ansprüche 1 bis 22, **dadurch gekennzeichnet, dass** das SE-metallhalogenid/Metalloxidgemisch durch Sublimation bei ≥ 800 °C im Hochvakuum gereinigt wird.

**24.** Synthesegemisch, erhalten durch Umsetzung eines Seltenerdoxids ($SE_2O_3$), mit SE ausgewählt aus der Gruppe Sc, Y, La, Pr, Nd, Pm, Sm, Eu, Gd, Tb, Dy, Ho, Er, Tm, Yb oder Lu mit einem Halogenierungsmittel der allgemeinen Formel

$$MHalX^1X^2X^3$$

mit M = Si, Ge, Sn, Ti, Zr oder Hf
Hal = Cl, Br oder I
$X^1$, $X^2$, $X^3$ = unabhängig voneinander Cl, Br, I, H, Alkoxy (-OR), wobei R einen Organorest mit 1 - 20 C-Atomen darstellt, Alkyl mit 1-20 C-Atomen oder Aryl mit 6 - 20 C-Atomen, wobei die Alkyl- oder Arylreste einen oder mehrere Halogensubstituenten, ausgewählt aus der Gruppe F, Cl, Br oder I tragen können,

in einem polaren, aprotischen Lösemittel nach einem in den Ansprüchen 1 bis 15 beschriebenen Verfahren.

**25.** Synthesegemisch, erhalten durch Umsetzung eines Seltenerdoxids $SE_2O_3$ mit SE = Sc, Y, La, Pr, Nd, Pm, Sm, Eu, Gd, Tb, Dy, Ho, Er, Tm, Yb oder Lu mit einem der Halogenierungsmittel ausgewählt aus der Gruppe $SiCl_4$, $SiBr_4$, $GeCl_4$, $SnCl_4$, $TiCl_4$, $TiBr_4$, $C_6H_5$-$SiCl_3$, 4-$ClC_6H_4SiCl_3$, 4-$BrC_6H_4SiCl_3$, $HSiCl_3$, $(H_3C)_2ClSiCH_2Cl$, $(H_3C)_2CLSiCH_2Br$, $(CH_3)_2SiCl_2$ oder $(CH_3)_3SiCl$ in einem polaren, aprotische Lösemittel oder einem aprotischen Lösemittelgemisch ausgewählt aus der Gruppe THF, 2-MeTHF, THP, Dimethylether, Diethylether, Methyl-tert-butylether, Ethylacetat, γ-Butyrolacton, Methylbenzoat, Dimethylcarbonat, Diethylcarbonat, Propylencarbonat, Ethylencarbonat, Aceton, Propiophenon, N-Methylpyrrolidon, Dimethylacetamid, NMPU, Acetonitril, Butyronitril, Dimethylsulfoxid, Triethylamin oder Tetramethylethylendiamin, entweder in reiner Form oder einer Mischung, wobei dem polaren, aprotischen Lösemittel bzw. dem Lösemittelgemisch gegebenenfalls ein Kohlenwasserstoff-Cosolvenz, ausgewählt aus den Gruppen Alkane oder Aromaten zugefügt sein kann.

**26.** Verwendung des Synthesegemisches nach Anspruch 24 oder 25 als Reagenz oder Katalysator für organische Reaktionen.

**27.** Verwendung des nach einem der Ansprüche 16 bis 23 hergestellten Verfahrensproduktes als Reagenz oder Katalysator für organische oder anorganische Reaktionen, als Rohstoff zur Herstellung spezifischer Seltenerdverbindungen oder als Katalysator in Polymerisationsreaktionen.

**28.** Verwendung nach einem der Ansprüche 26 bis 27 **dadurch gekennzeichnet, dass** die Polymerisationsreaktion zur Herstellung von Polyolefinen oder Polyestern führt.

**29.** Verwendung nach einem der Ansprüche 26 bis 27, **dadurch gekennzeichnet, dass** die organische oder anorganische Reaktion eine Kondensation, Aldolreaktion, Acetalbildung, CC-Verknüpfung oder Ringöffnungsreaktion ist.

## Claims

**1.** A method for producing anhydrous rare-earth metal halides ($REHal_3$), **characterised in that** rare-earth metal oxides $RE_2O_3$, where RE = Sc, Y, La, Pr, Nd, Pm, Sm, Eu, Gd, Tb, Dy, Ho, Er, Tm, Yb or Lu, are reacted with halogenating agents having the general formula

$$MHa1X^1X^2X^3 \qquad (1)$$

where M = Si, Ge, Sn, Ti, Zr, Hf
Hal = Cl, Br, I
$X^1$, $X^2$, $X^3$ = mutually independently Cl, Br, I, H, alkoxide (-OR), wherein R represents an organic radical having 1-20 C atoms, alkyl having 1-20 C atoms or aryl having 6-20 C atoms, wherein the alkyl or aryl radicals can bear one or more further halogen substituents selected from the group comprising F, Cl, Br or I

in an aprotic, polar solvent.

**2.** A method according to claim 1, **characterised in that** tetrahalogen compounds $MHal_4$ are used as halogenating agents.

**3.** A method according to claim 1, **characterised in that** the following compounds are used as halogenating agents: $C_6H_5MHal_3$, $HMHal_3$, $C_6H_4HalMHal_3$, $(H_3C)_2MClCH_2Hal$, $(CH_3)_2MHal_2$, $(CH_3)_3MHal$ or mixtures thereof.

**4.** A method according to one of claims 1 to 3, **characterised in that** the following compounds are used as halogenating agents: $SiCl_4$, $SiBr_4$, $GeCl_4$, $SnCl_4$, $TiCl_4$, $TiBr_4$, $C_6H_5SiCl_3$, 4-$ClC_6H_4SiCl_3$, 4-$BrC_6H4SiCl_3$, $HSiCl_3$, $(H_3C)_2ClSiCH_2Cl$, $(H_3C)_2ClSiCH_2Br$, $(CH_3)_2SiCl_2$ or $(CH_3)_3SiCl$.

**5.** A method according to one of claims 1 to 4, **characterised in that** one or more ethereal compounds are used as the polar, aprotic solvent, wherein these can be open-chain, such as $R^1$-O-$R^2$ (where $R^1$ and $R^2$ are mutually independently alkyl or aryl having 1 to 8 C atoms); or cyclic, such as

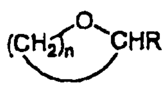

(where n = 3 or 4 and R = H or alkyl having 1 to 8 C atoms); or polyfunctional, such as R-O-(-$CH_2$-$CH_2$-O)$_n$-R' (where R and R' are mutually independently alkyl radicals having 1 to 8 C atoms and n = 1 to 100) and are used either in pure form or as a mixture.

**6.** A method according to one of claims 1 to 4, **characterised in that** one or more of the following substances is used

as the aprotic, polar solvent:

esters, such as carboxylic acid esters (such as ethyl acetate, γ-butyrolactone, methyl benzoate), or carbonic acid esters (such as dimethyl carbonate, diethyl carbonate, propylene carbonate, ethylene carbonate), or mixtures thereof; or ketones (such as acetone, propionone); or amides (such as N-methyl pyrrolidone, dimethyl acetamide, NMPU); or nitriles (such as acetonitrile, butyronitrile); or halogen-free sulfur compounds (such as dimethyl sulfoxide);
or tertiary amines (such as triethylamine, tetramethyl ethylene diamine).

**7.** A method according to claim 6, **characterised in that** tetrahydrofuran, tetrahydropyran, 2-methyltetrahydrofuran, dimethyl ether, diethyl ether or methyl tert-butyl ether or a mixture thereof is preferably used as the ethereal solvent.

**8.** A method according to one of claims 1 to 7, **characterised in that** one or more hydrocarbons are added to the polar, aprotic solvent in the weight ratio of 1 part of polar, aprotic solvent to a maximum of 5 parts of hydrocarbon.

**9.** A method according to claim 8, **characterised in that** one or more alkanes (such as pentane, hexane, cyclohexane, methyl cyclohexane, heptane or octane) or one or more aromatics, such as benzene, toluene, ethyl benzene, cumene or xylene, are used as the hydrocarbon.

**10.** A method according to one of claims 1 to 9, **characterised in that** the rare-earth metal oxides are used in powdered form and with residual water contents of < 0.5 wt.%.

**11.** A method according to one of claims 1 to 10, **characterised in that** $Nd_2O_3$, $Sm_2O_3$ or $La_2O_3$ are used as rare-earth metal oxides.

**12.** A method according to one of claims 1 to 11, **characterised in that** the molar ratio between the rare-earth oxide $RE_2O_3$ and the metal halogen compound $MHalX^1X^2X^3$ is chosen as follows:

approx. 1 : 6 for $X^1$, $X^2$, $X^3$ ‡ Hal
approx. 1 : 3 for $X^1$ = Hal, $X^2$, $X^3$ ‡ Hal
approx. 1 : 2 for $X^1$, $X^2$ = Hal, $X^3$ ‡ Hal
approx. 1 : 1.5 for $X^1$, $X^2$, $X^3$ = Hal

**13.** A method according to one of claims 1 to 12, **characterised in that** the halogenating agent is used in an excess of 1 to 50 mol%.

**14.** A method according to one of claims 1 to 13, **characterised in that** the reaction temperature is in the range from -20 to +100°C.

**15.** A method according to claim 14, **characterised in that** the reaction temperature is in the range from 0 to 70°C.

**16.** A method according to one of claims 1 to 15, **characterised in that** after the end of the conversion but before the start of any gelling process that might begin, the rare-earth metal halides obtained are separated from the solution of the metal oxide by-product by means of a solid/liquid separating operation.

**17.** A method according to claim 16, **characterised in that** the solid rare-earth metal halides obtained are purified by washing with an aprotic solvent.

**18.** A method according to one of claims 16 to 17, **characterised in that** the purification is performed on a filter, in a Soxhlet apparatus or in a column by fixed-bed extraction.

**19.** A method according to one of claims 1 to 18, **characterised in that** after the exothermic reaction, has died down the reaction mixture is evaporated until dry.

**20.** A method according to claim 19, **characterised in that** the evaporation is performed in the temperature range between 20 and 100°C and at least partly under reduced pressure.

**21.** A method according to one of claims 19 to 20, **characterised in that** the rare-earth halide is obtained from the

evaporation residue by extraction with a pH-neutral solvent.

**22.** A method according to claim 21, **characterised in that** the pH-neutral solvent contains one or more substances selected from the group comprising ethers, alcohols, esters, ketones and nitriles and optionally additionally one or more hydrocarbons.

**23.** A method according to one of claims 1 to 22, **characterised in that** the rare-earth metal halide/metal oxide mixture is purified by sublimation at ≥ 800°C under high vacuum.

**24.** A synthesis mixture obtained by reacting a rare-earth oxide ($RE_2O_3$), where RE is selected from the group comprising Sc, Y, La, Pr, Nd, Pm, Sm, Eu, Gd, Tb, Dy, Ho, Er, Tm, Yb or Lu, with a halogenating agent having the general formula

$$MHalX^1X^2X^3$$

where M = Si, Ge, Sn, Ti, Zr or Hf
Hal = Cl, Br or I
$X^1$, $X^2$, $X^3$ = mutually independently Cl, Br, I, H, alkoxy (-OR), wherein R represents an organic radical having 1-20 C atoms, alkyl having 1-20 C atoms or aryl having 6-20 C atoms, wherein the alkyl or aryl radicals can bear one or more halogen substituents selected from the group comprising F, Cl, Br or I,

in a polar, aprotic solvent according to a method described in claims 1 to 15.

**25.** A synthesis mixture obtained by reacting a rare-earth oxide $RE_2O_3$, where RE = Sc, Y, La, Pr, Nd, Pm, Sm, Eu, Gd, Tb, Dy, Ho, Er, Tm, Yb or Lu, with one of the halogenating agents selected from the group comprising $SiCl_4$, $SiBr_4$, $GeCl_4$, $SnCl_4$, $TiCl_4$, $TiBr_4$, $C_6H_5SiCl_3$, 4-$ClC_6H_4SiCl_3$, 4-$BrC_6H_4SiCl_3$, $HSiCl_3$, $(H_3C)_2ClSiCH_2Cl$, $(H_3C)_2ClSiCH_2Br$, $(CH_3)_2SiCl_2$ or $(CH_3)_3SiCl$ in a polar, aprotic solvent or an aprotic solvent blend selected from the group comprising THF, 2-MeTHF, THP, dimethyl ether, diethyl ether, methyl tert-butyl ether, ethyl acetate, γ-butyrolactone, methyl benzoate, dimethyl carbonate, diethyl carbonate, propylene carbonate, ethylene carbonate, acetone, propiophenone, N-methyl pyrrolidone, dimethyl acetamide, NMPU, acetonitrile, butyronitrile, dimethyl sulfoxide, triethylamine or tetramethyl ethylene diamine, either in pure form or as a mixture, wherein a hydrocarbon co-solvent, selected from the group of alkanes or aromatics, can optionally be added to the polar, aprotic solvent or solvent blend.

**26.** Use of the synthesis mixture according to claim 24 or 25 as a reagent or catalyst for organic reactions.

**27.** Use of the process product produced according to one of claims 16 to 23 as a reagent or catalyst for organic or inorganic reactions, as a raw material for producing specific rare-earth compounds or as a catalyst in polymerisation reactions.

**28.** Use according to one of claims 26 to 27, **characterised in that** the polymerisation reaction leads to the production of polyolefins or polyesters.

**29.** Use according to one of claims 26 to 27, **characterised in that** the organic or inorganic reaction is a condensation, aldol reaction, acetal formation, C-C coupling or ring-opening reaction.

## Revendications

**1.** Procédé de préparation d'halogénures de terres rares $TRHal_3$ anhydres, **caractérisé en ce que** l'on fait réagir, dans un solvant polaire aprotique, des oxydes de terre rare de formule $TR_2O_3$, où TR représente Sc, Y, La, Pr, Nd, Pm, Sm, Eu, Gd, Tb, Dy, Ho, Er, Tm, Yb ou Lu, avec des agents d'halogénation de formule générale

$$MHalX^1X^2X^3 \qquad (1)$$

dans laquelle

- M représente Si, Ge, Ti, Zr ou Hf,
- Hal représente Cl, Br ou I,
- et $X^1$, $X^2$ et $X^3$ représentent chacun, indépendamment l'un de l'autre, un atome de chlore, de brome ou d'iode,

un atome d'hydrogène, un groupe alcoxy de formule -OR où R représente un groupe organique comportant de 1 à 20 atomes de carbone, ou encore un groupe alkyle comportant de 1 à 20 atomes de carbone ou aryle comportant de 6 à 20 atomes de carbone, étant entendu que ces groupes alkyle ou aryle peuvent porter, en tant que substituant(s), un ou plusieurs autre(s) atome(s) d'halogène choisi(s) parmi les atomes de fluor, de chlore, de brome et d'iode.

2. Procédé conforme à la revendication 1, **caractérisé en ce que** l'on utilise, en tant qu'agents d'halogénation, des tétrahalogénures de formule $MHal_4$.

3. Procédé conforme à la revendication 1, **caractérisé en ce que** l'on utilise, en tant qu'agents d'halogénation, des composés de formules suivantes : $C_6H_5MHal_3$, $HMHal_3$, $C_6H_4HalMHal_3$, $(H_3C)_2MClCH_2Hal$, $(CH_3)_2MHal_2$ et $(CH_3)_3MHal$, ou des mélanges de ces composés.

4. Procédé conforme à l'une des revendications 1 à 3, **caractérisé en ce que** l'on utilise, en tant qu'agents d'halogénation, les composés de formules suivantes : $SiCl_4$, $SiBr_4$, $GeCl_4$, $SnCl_4$, $TiCl_4$, $TiBr_4$, $C_6H_5SiCl_3$, 4-$ClC_6H_4SiCl_3$, 4-$BrC_6H_4SiCl_3$, $HSiCl_3$, $(H_3C)_2ClSiCH_2Cl$, $(H_3C)_2ClSiCH_2Br$, $(CH_3)_2SiCl_2$ ou $(CH_3)_3SiCl$.

5. Procédé conforme à l'une des revendications 1 à 4, **caractérisé en ce que** l'on utilise, en tant que solvant polaire aprotique, un ou plusieurs composé(s) de type éther, lesquels peuvent être

   - à chaîne ouverte, tels ceux de formule $R^1$-O-$R^2$ où $R^1$ et $R^2$ représentent chacun, indépendamment l'un de l'autre, un groupe alkyle ou aryle comportant de 1 à 8 atomes de carbone,
   - cycliques, tels ceux de formule

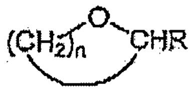

   où l'indice n vaut 3 ou 4 et R représente un atome d'hydrogène ou un groupe alkyle comportant de 1 à 8 atomes de carbone,
   - ou polyfonctionnels, tels ceux de formule R-O-$(CH_2-CH_2-O)_n$-R' où R et R' représentent chacun, indépendamment l'un de l'autre, un groupe alkyle comportant de 1 à 8 atomes de carbone et l'indice n vaut de 1 à 100,

   et sont utilisés à l'état pur ou à l'état de mélange.

6. Procédé conforme à l'une des revendications 1 à 4, **caractérisé en ce que** l'on utilise, en tant que solvant polaire aprotique, une ou plusieurs des substances indiquées dans ce qui suit : des esters, tels les esters d'acide carboxylique, par exemple l'acétate d'éthyle, la $\gamma$-butyrolactone et le benzoate de méthyle, ou les esters de l'acide carbonique, par exemple les carbonate de diméthyle, carbonate de diéthyle, carbonate de propylène et carbonate d'éthylène, ou leurs mélanges ; ou des cétones, telles l'acétone et la propionone ; ou des amides, tels les N-méthyl-pyrrolidone, diméthyl-acétamide et NMPU ; ou des nitriles, tels l'acétonitrile et le butyronitrile ; ou des composés soufrés non-halogénés, tel le diméthyl-sulfoxyde ; ou des amines tertiaires, telles la triéthyl-amine et la tétraméthyl-éthylènediamine.

7. Procédé conforme à la revendication 6, **caractérisé en ce que** l'on utilise de préférence, en tant que solvant de type éther, du tétrahydrofurane, du tétrahydropyrane, du 2-méthyl-tétrahydrofurane, du diméthyl-éther, du diéthyl-éther ou du méthyl-tertiobutyl-éther, ou un mélange de ceux-ci.

8. Procédé conforme à l'une des revendications 1 à 7, **caractérisé en ce que** l'on ajoute au solvant polaire aprotique un ou plusieurs hydrocarbure(s), en une proportion en poids d'au plus 5 parties d'hydrocarbure(s) pour 1 partie de solvant polaire aprotique.

9. Procédé conforme à la revendication 8, **caractérisé en ce que** l'on utilise, en tant qu'hydrocarbure(s), un ou plusieurs alcane(s), tels les pentane, hexane, cyclohexane, méthyl-cyclohexane, heptane et octane, ou un ou plusieurs aromatique(s), tels les benzène, toluène, éthyl-benzène, cumène et xylène.

10. Procédé conforme à l'une des revendications 1 à 9, **caractérisé en ce que** les oxydes de terre rare sont utilisés à l'état de poudre et présentent une teneur résiduelle en eau de moins de 0,5 % en poids.

**11.** Procédé conforme à l'une des revendications 1 à 10, **caractérisé en ce que** l'on utilise, en tant qu'oxyde de terre rare, $Nd_2O_3$, $Sm_2O_3$ ou $La_2O_3$.

**12.** Procédé conforme à l'une des revendications 1 à 11, **caractérisé en ce que** le rapport molaire entre l'oxyde de terre rare $TR_2O_3$ et l'halogénure de métal $MHalX^1X^2X^3$ est choisi comme suit :

- environ 1/6 quand $X^1$, $X^2$ et $X^3$ ne représentent pas des atomes d'halogène,
- environ 1/3 quand $X^1$ représente un atome d'halogène et $X^2$ et $X^3$ ne représentent pas des atomes d'halogène,
- environ 1/2 quand $X^1$ et $X^2$ représentent des atomes d'halogène et $X^3$ ne représente pas un atome, d'halogène,
- et environ 1/1,5 quand $X^1$, $X^2$ et $X^3$ représentent des atomes d'halogène.

**13.** Procédé conforme à l'une des revendications 1 à 12, **caractérisé en ce qu'**on utilise l'agent d'halogénation en excès de 1 à 50 % en moles.

**14.** Procédé conforme à l'une des revendications 1 à 13, **caractérisé en ce que** la température de réaction se situe dans l'intervalle allant de -20 °C à +100 °C.

**15.** Procédé conforme à la revendication 14, **caractérisé en ce que** la température de réaction se situe dans l'intervalle allant de 0 °C à 70 °C.

**16.** Procédé conforme à l'une des revendications 1 à 15, **caractérisé en ce que** les halogénures de terres rares obtenus sont séparés de la solution d'oxyde de métal formé en tant que produit secondaire, par une opération de séparation solide-liquide, après la fin de la réaction, mais avant que ne démarre un éventuel processus de formation de gel.

**17.** Procédé conforme à la revendication 16, **caractérisé en ce que** les halogénures de terre rare solides obtenus sont purifiés par lavage avec un solvant aprotique.

**18.** Procédé conforme à l'une des revendications 16 et 17, **caractérisé en ce que** la purification est réalisée sur un filtre, dans un appareil de Soxhlet ou dans une colonne, par extraction de lit solide.

**19.** Procédé conforme à l'une des revendications 1 à 18, **caractérisé en ce que** le mélange réactionnel, une fois apaisée la réaction exothermique, est évaporé à sec.

**20.** Procédé conforme à la revendication 19, **caractérisé en ce que** l'évaporation est réalisée dans la plage de température située entre 20 °C et 100 °C et, au moins en partie, sous pression réduite.

**21.** Procédé conforme à l'une des revendications 19 et 20, **caractérisé en ce que** l'halogénure de terre rare est obtenu, à partir du résidu d'évaporation, par extraction à l'aide d'un solvant à pH neutre.

**22.** Procédé conforme à la revendication 21, **caractérisé en ce que** le solvant à pH neutre comprend une ou plusieurs substance(s) choisie(s) dans l'ensemble constitué par les éthers, alcools, esters, cétones et nitriles, et contient en plus, éventuellement, un ou plusieurs hydrocarbures.

**23.** Procédé conforme à l'une des revendications 1 à 22, **caractérisé en ce que** le mélange d'halogénure de terre rare et d'oxyde de métal est purifié par sublimation à 800 °C ou plus et sous vide poussé.

**24.** Mélange de synthèse obtenu par réaction d'un oxyde de terre rare de formule $TR_2O_3$, où TR représente Sc, Y, La, Pr, Nd, Pm, Sm, Eu, Gd, Tb, Dy, Ho, Er, Tm, Yb ou Lu, et d'un agent d'halogénation de formule générale

$$MHalX^1X^2X^3$$

dans laquelle

- M représente Si, Ge, Ti, Zr ou Hf,
- Hal représente Cl, Br ou I,
- et $X^1$, $X^2$ et $X^3$ représentent chacun, indépendamment l'un de l'autre, un atome de chlore, de brome ou d'iode, un atome d'hydrogène, un groupe alcoxy de formule -OR où R représente un groupe organique comportant de 1 à 20 atomes de carbone, ou encore un groupe alkyle comportant de 1 à 20 atomes de carbone ou aryle

comportant de 6 à 20 atomes de carbone, étant entendu que ces groupes alkyle ou aryle peuvent porter, en tant que substituant(s), un ou plusieurs atome(s) d'halogène choisi(s) parmi les atomes de fluor, de chlore, de brome et d'iode,

dans un solvant polaire aprotique, suivant un procédé décrit dans les revendications 1 à 15

**25.** Mélange de synthèse obtenu par réaction d'un oxyde de terre rare de formule $TR_2O_3$, où TR représente Sc, Y, La, Pr, Nd, Pm, Sm, Eu, Gd, Tb, Dy, Ho, Er, Tm, Yb ou Lu, et d'un agent d'halogénation choisi dans l'ensemble des composés de formules $SiCl_4$, $SiBr_4$, $GeCl_4$, $SnCl_4$, $TiCl_4$, $TiBr_4$, $C_6H_5SiCl_3$, 4-$ClC_6H_4SiCl_3$, 4-$BrC_6H_4SiCl_3$, $HSiCl_3$, $(H_3C)_2ClSiCH_2Cl$, $(H_3C)_2ClSiCH_2Br$, $(CH_3)_2SiCl_2$ ou $(CH_3)_3SiCl$, dans un solvant polaire aprotique ou un mélange de solvants polaires aprotiques choisi(s) dans l'ensemble constitué par les suivants : tétrahydrofurane, 2-méthyltétrahydrofurane, tétrahydropyrane, diméthyl-éther, diéthyl-éther, méthyl-tertiobutyl-éther, acétate d'éthyle, $\gamma$-butyrolactone, benzoate de méthyle, carbonate de diméthyle, carbonate de diéthyle, carbonate de propylène, carbonate d'éthylène, acétone, propiophénone, N-méthyl-pyrrolidone, diméthyl-acétamide, NMPU, acétonitrile, butyronitrile, diméthyl-sulfoxyde, triéthyl-amine et tétraméthyl-éthylènediamine, à l'état pur ou à l'état de mélange, étant entendu qu'au solvant polaire aprotique ou au mélange de tels solvants peut être éventuellement ajouté un co-solvant hydrocarbure, choisi dans l'ensemble constitué par les alcanes et les aromatiques.

**26.** Utilisation d'un mélange de synthèse conforme à l'une des revendications 24 et 25, en tant que réactif ou catalyseur pour des réactions de chimie organique.

**27.** Utilisation d'un produit de procédé préparé conformément à l'une des revendications 16 à 23, en tant que réactif ou catalyseur pour des réactions de chimie organique ou inorganique, en tant que matière première pour la préparation de composés particuliers de terres rares, ou en tant que catalyseur dans des réactions de polymérisation.

**28.** Utilisation conforme à l'une des revendications 26 et 27, **caractérisée en ce que** la réaction de polymérisation conduit à la préparation de polyoléfines ou de polyesters.

**29.** Utilisation conforme à l'une des revendications 26 et 27, **caractérisée en ce que** la réaction de chimie organique ou inorganique est une condensation, une aldolisation, une acétalisation, une réaction de jonction C-C ou une réaction d'ouverture de cycle.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 919573 A


### In der Beschreibung aufgeführte Nicht-Patentliteratur


- **R. TAUBE et al.** *J. Organomet. Chem.,* 1996, vol. 1 (513), 37-47
- Gmelins Handbook of Inorg. Chem. 156